# EUROPEAN PATENT APPLICATION

(11) **EP 2 592 391 A2**
(43) Date of publication of application: **15.05.2013**
(21) Application number: 12192061.5
(22) Date of filing: 09.11.2012
(51) Int. Cl.: G01D 5/24

(54) **Sensing element for sensor assembly**

(30) Priority: 11.11.2011 US 201113294874
(71) Applicant: General Electric Company, Schenectady, New York 12345 (US)
(72) Inventor: Sheikman, Boris Leonid, Minden, NV 89423 (US); Go, Steven, Niskayuna, NY 12309 (US); Weller, Nathan Andrew, Minden, NV 89423 (US); Lee, Yongjae, Niskayuna, NY 12309 (US)
(74) Representative: Picker, Madeline Margaret

(57) **Abstract**

A probe (202) for use in a sensor assembly (110) includes a sensing element body (300) and a sensing element (206) coupled to the sensing element body. The sensing element is at least partially capacitively coupled to a signal processing device (200). The sensing element generates an electromagnetic field (224) when at least one signal is received, and a loading is induced to the sensing element when an object is positioned within the electromagnetic field.

## Description

### BACKGROUND OF THE INVENTION

The present application relates generally to position sensing systems and, more particularly, a sensing element for use in a sensor assembly.

Known machines have rotating parts. It is important to know the position and/or behavior of certain rotating parts during operation. One or more sensors may be used to measure and/or monitor such behavior and to determine, for example, operational characteristics of an operating machine or motor. Often, such sensors are coupled to a monitoring system that includes a plurality of monitors. The monitoring system receives signals from one or more sensors, performs at least one processing step on the signals, and transmits the modified signals to a diagnostic platform that displays the measurements to a user.

At least some known machines use eddy current sensors to monitor a relative position and/or behavior of a machine component during operation. However, the use of known eddy current sensors may be limited because a detection range of such sensors is typically about half of the diameter of the eddy current sensing element. Other known machines use optical sensors to measure the position and/or behavior of a machine component. However, if such known optical sensors become fouled by contaminants, such sensors may provide inaccurate measurements. As such, optical sensors may be unsuitable for use in many industrial environments. Moreover, known optical sensors may not be suitable for use in detecting vibration and/or a position of a machine component through a liquid medium and/or a medium that includes particulates.

### BRIEF DESCRIPTION OF THE INVENTION

In one embodiment, a probe for use in a sensor assembly is provided. The probe includes a sensing element body and a sensing element coupled to the sensing element body. The sensing element includes a first conductor, a second conductor, and a connecting portion that enables said second conductor to be capacitively coupled to a ground pad. The sensing element generates an electromagnetic field when it receives at least one signal. A loading is induced to the sensing element when an object is positioned within the electromagnetic field.

In another embodiment, a sensor assembly is provided that includes a sensing element body and a sensing element coupled to the sensing element body. The sensing element includes a first conductor, a second conductor, and a connecting portion that enables said second conductor to be capacitively coupled to a ground pad. The sensing element generates an electromagnetic field when it receives at least one signal. The sensor assembly also includes a signal processing device coupled to the sensing element for transmitting at least one signal to the sensing element and for calculating a proximity measurement based on a signal received from the sensing element.

In a further embodiment, a method for measuring the proximity of a machine component relative to a sensing element is provided. The method includes transmitting at least one signal to the sensing element that includes a first conductor, a second conductor, and a connecting portion that enables the second conductor to be capacitively coupled to a ground pad. The sensing element generates an electromagnetic field when at least one signal is received. The method also includes generating an electromagnetic field from the at least one signal, generating a loading signal representative of a disruption of the electromagnetic field, and calculating the proximity of the machine component to the sensing element based on the loading signal.

### BRIEF DESCRIPTION OF THE DRAWINGS

FIG. 1 is a block diagram of an example power generation system.
FIG. 2 is a block diagram of an example sensor assembly that may be used with the power generation system shown in FIG. 1.
FIG. 3 is a perspective view of an example sensing element body that may be used with the sensor assembly shown in FIG. 2.
FIG. 4 is an enlarged side view of a portion of the example sensing element body shown in FIG. 3.
FIG. 5 is an enlarged perspective view of a portion of the example sensing element body shown in FIG. 3.

### DETAILED DESCRIPTION OF EMBODIMENT OF THE INVENTION

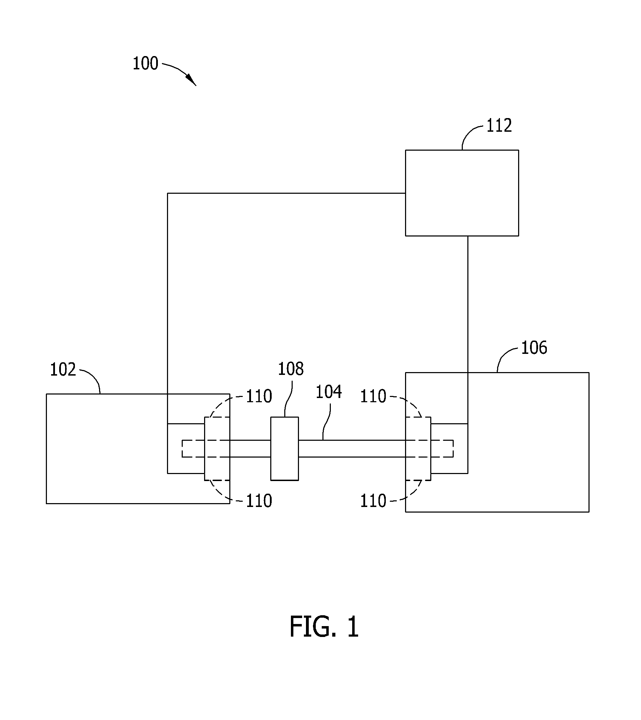

FIG. 1 illustrates an example power generation system 100 that includes at least one machine 102. In the example embodiment, machine 102 may be, but is not limited to only being, a wind turbine, a hydroelectric turbine, a gas turbine, or a compressor. Alternatively, machine 102 may be any other machine used in a power generation system. In the example embodiment, machine 102 rotates a drive shaft 104 coupled to a load 106, such as a generator.

In the example embodiment, drive shaft 104 is at least partially supported by one or more bearings (not shown) housed within machine 102 and/or within load 106. Alternatively or additionally, bearings may be housed within a separate support structure 108, such as a gearbox, or within any other structure or component that enables power generation system 100 to function as described herein.

In the example embodiment, power generation system 100 includes at least one sensor assembly 110 that measures and/or monitors at least one operating condition of machine 102, of drive shaft 104, of load 106, and/or of any other component within power generation system 100 that enables system 100 to function as described herein. More specifically, in the example embodiment, sensor assembly 110 is a proximity sensor assembly 110 that is positioned adjacent to drive shaft 104 for measuring and/or monitoring a distance (not shown in FIG. 1) defined between drive shaft 104 and sensor assembly 110 continually as drive shaft 104 rotates.

In the example embodiment, sensor assembly 110 uses microwave signals to measure a relative proximity of a component of power generation system 100 with respect to sensor assembly 110. As used herein, the term "microwave" refers to a signal or a component that receives and/or transmits signals having one or more frequencies between about 300 Megahertz (MHz) and about 300 Gigahertz (GHz). Although signals in the microwave range are used in the example embodiments described herein, it should be appreciated that signals of any frequency and/or intensity may be used with sensor assembly 110 to enable assembly 110 to function as described herein.

Alternatively, sensor assembly 110 may measure and/or monitor any other component of power generation system 100, and/or may be any other sensor or transducer assembly that enables power generation system 100 to function as described herein. In the example embodiment, each sensor assembly 110 may be positioned in any location within power generation system 100 that enables power generation system 100 to function as described herein. Further, in the example embodiment, at least one sensor assembly 110 is coupled to a diagnostic system 112 for use in processing and/or analyzing one or more signals generated by sensor assemblies 110.

During operation of machine 102, one or more components of power generation system 100, such as drive shaft 104, may change position with respect to at least one sensor assembly 110. For example, components may vibrate, rotate in a non-concentric manner, and/or may expand or contract as the operating temperature within power generation system 100 changes. In the example embodiment, sensor assemblies 110 measure and/or monitor the proximity and/or the position of components relative to each sensor assembly 110, and transmit a signal representative of the measured proximity and/or the position of the components (hereinafter referred to as a "proximity measurement signal") to diagnostic system 112 for processing and/or analysis.

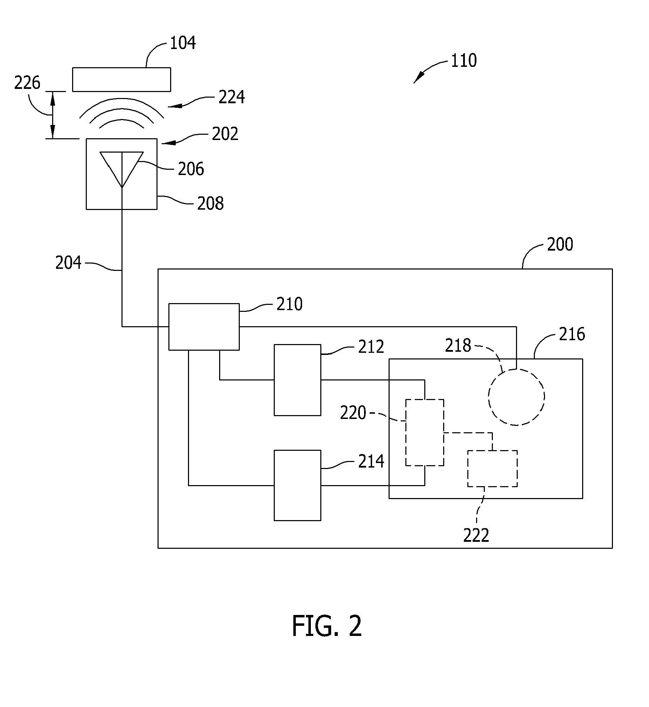

FIG. 2 is a schematic diagram of an example sensor assembly 110 that may be used with power generation system 100 (shown in FIG. 1). In the example embodiment, sensor assembly 110 includes a signal processing device 200, and a probe 202 coupled to signal processing device 200 via a data conduit 204. Probe 202 includes a sensing element 206, or emitter, that is coupled to, and/or positioned within, a probe housing 208. More specifically, in the example embodiment, probe 202 is a microwave probe 202 that includes a microwave emitter 206. As such, sensing element 206 operates with at least one resonant frequency within a microwave frequency range.

Alternatively, probe 202 includes any sensing element 206 capable of emitting at least one resonant frequency that enables sensor assembly 110 to function as described herein.

In the example embodiment, signal processing device 200 includes a directional coupling device 210 that is coupled to a transmission power detector 212, to a reception power detector 214, and to a signal conditioning device 216. In the example embodiment, signal conditioning device 216 includes a signal generator 218, a subtractor 220, and a linearizer 222. Sensing element 206 emits an electromagnetic field 224 when an electric signal is transmitted through sensing element 206.

During operation, in the example embodiment, signal generator 218 generates at least one electrical signal having a microwave frequency (hereinafter referred to as a "microwave signal") that is equal or approximately equal to the resonant frequency of sensing element 206. Moreover, signal generator 218 transmits the microwave signal to directional coupling device 210, which separates the microwave signal such that at least a portion of the microwave signal is directed to transmission power detector 212 and such that the remaining portion of the microwave signal is directed to sensing element 206. As the microwave signal is transmitted through sensing element 206, electromagnetic field 224 is emitted from sensing element 206 and out of probe housing 208. If an object, such as a drive shaft 104 or another component of machine 102 (shown in FIG. 1) and/or of power generation system 100 enters and/or changes a relative position within electromagnetic field 224, an electromagnetic coupling may occur between that object and field 224. More specifically, the presence of the object within electromagnetic field 224 and/or the movement of the object within electromagnetic field 224 may cause field 224 to become disrupted.

For example, an induction and/or capacitive effect induced within at least a portion of the object, including, but not limited to a surface of the object, may cause at least a portion of electromagnetic field 224 to be inductively and/or capacitively coupled to the object as an electrical current and/or charge. In such an instance, sensing element 206 is detuned and a loading is induced to sensing element 206. Measureable results of the detuning of sensing element 206 include, but are not limited to, a resonant frequency of sensing element 206 being reduced and/or changed, and/or the power level of sensing element 206 changing (i.e., a return loss change). The loading induced to sensing element 206 causes a reflection of the microwave signal (hereinafter referred to as a "detuned loading signal") to be transmitted through data conduit 204 to directional coupling device 210. In the example embodiment, the detuned loading signal has a lower power amplitude and/or a different phase than the power amplitude and/or the phase of the microwave signal. Moreover, in the example embodiment, the power amplitude of the detuned loading signal is dependent upon the proximity of the object to sensing element 206. Directional coupling device 210 separates the detuned loading signal, transmits or directs at least a portion of the detuned loading signal to reception power detector 214, and transmits or directs the remaining portion of the detuned loading signal to signal generator 218.

In the example embodiment, reception power detector 214 determines an amount of power based on and/or contained within the detuned loading signal and transmits a signal representative of the detuned loading signal power to signal conditioning device 216. Transmission power detector 212 determines an amount of power based on and/or contained within the microwave signal and transmits a signal representative of the microwave signal power to signal conditioning device 216. In the example embodiment, subtractor 220 receives the microwave signal power and the detuned loading signal power, and calculates a difference between the microwave signal power and the detuned loading signal power. Subtractor 220 then transmits a signal representative of the calculated difference (hereinafter referred to as a "power difference signal") to linearizer 222.

In the example embodiment, an amplitude of the power difference signal is proportional, such as inversely or exponentially proportional, to a distance 226 defined between the object, such as drive shaft 104, within electromagnetic field 224 and probe 202 and/or sensing element 206 (i.e., distance 226 is known as the object proximity). Depending on the characteristics of sensing element 206, such as, for example, the geometry of sensing element 206, the amplitude of the power difference signal may at least partially exhibit a non-linear relationship with respect to the object proximity.

In the example embodiment, linearizer 222 transforms the power difference signal into a voltage output signal (i.e., the "proximity measurement signal") that exhibits a substantially linear relationship between the object proximity and the amplitude of the proximity measurement signal. Further, in the example embodiment, linearizer 222 transmits the proximity measurement signal to diagnostic system 112 (shown in FIG. 1) with a scale factor that is suitable to enable processing and/or analysis within diagnostic system 112. For example, in one embodiment, the proximity measurement signal has a scale factor of volts per millimeter. Alternatively, the proximity measurement signal may have any other scale factor that enables diagnostic system 112 and/or power generation system 100 to function as described herein.

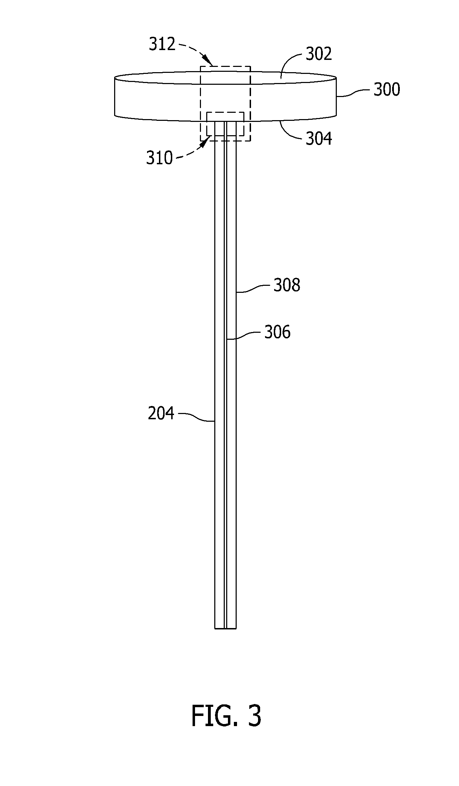

FIG. 3 is a perspective view of an example sensing element body 300 and data conduit 204 that may be used with sensor assembly 110 (shown in FIG. 1). In the example embodiment, sensing element body 300 is positioned within, and/or is coupled to, probe housing 208 (shown in FIG. 2). Further, sensing element 206 (shown in FIG. 2) is coupled to sensing element body 300.

In the example embodiment, sensing element body 300 includes a front surface 302 and an opposing rear surface 304. Sensing element 206 is coupled to, and/or is formed integrally with, front surface 302. More specifically, in the example embodiment, sensing element body 300 is a substantially planar printed circuit board, and sensing element 206 includes one or more traces or conductors (not shown in FIG. 3) that are formed integrally with, and/or that are coupled to, sensing element body front surface 302. In the example embodiment, the traces or conductors are manufactured from any conductive material, such as copper, that enables sensing element 206 to function as described herein. Alternatively, sensing element 206 and/or sensing element body 300 may be configured and/or constructed in any other arrangement that enables sensor assembly 110 to function as described herein.

In the example embodiment, data conduit 204 includes an inner conductor 306 and an outer conductor 308 that substantially encloses inner conductor 306 such that conductors 306 and 308 are coaxially aligned with respect to each other. Data conduit 204, in the example embodiment, is a semi-rigid cable 204 that couples sensing element 206 to signal processing device 200 (shown in FIG. 2). Alternatively, data conduit 204 may be any other cable or conduit that enables sensor assembly 110 to function as described herein. In the example embodiment, inner conductor 306 and outer conductor 308 are each coupled to sensing element body 300 and/or to sensing element 206 to enable microwave signals to be transmitted from signal processing device 200 through sensing element 206.

During operation, at least one microwave signal is transmitted to sensing element 206 through inner conductor 306 and through outer conductor 308. In the example embodiment, the at least one microwave signal transmitted to sensing element 206 is equal, or approximately equal, to the resonance of sensing element 206. Alternatively, the at least one microwave signal may be any frequency that enables sensor assembly 110 to function as described herein. As the microwave signal is propagated through sensing element 206, an electromagnetic field 224 (shown in FIG. 2) is emitted. A proximity measurement is determined based on the loading induced to sensing element 206, as described in more detail herein.

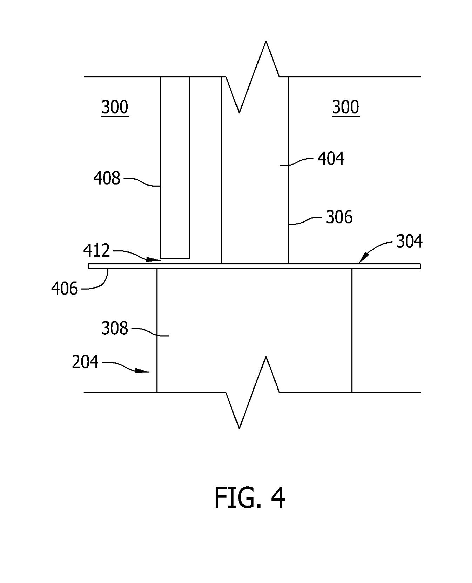

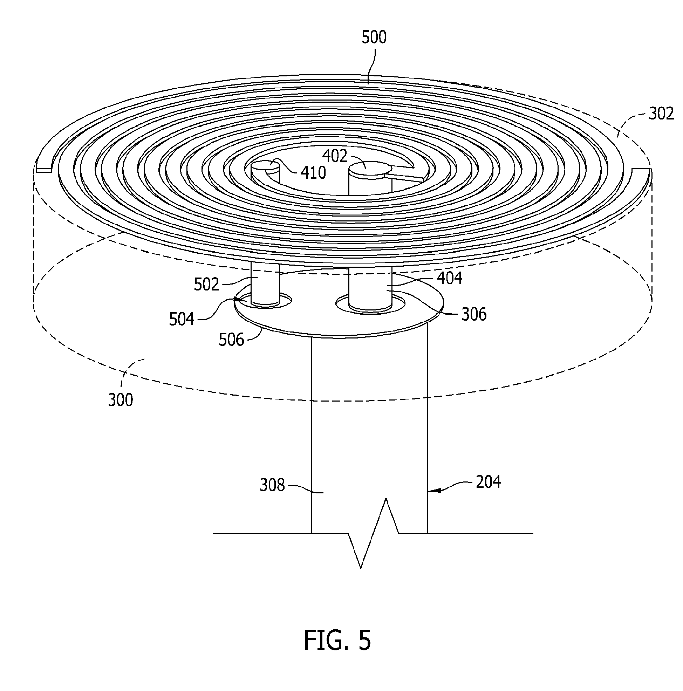

FIG. 4 is an enlarged side view of a portion of sensing element body 300 taken along area 310 (shown in FIG. 3). Inner conductor 306 is coupled to a first conductor 402 (shown in FIG. 5) that is coupled to sensing element 500 (shown in FIG. 5). In the example embodiment, inner conductor 306 extends from rear surface 304 through a center via 404 (i.e., a conductively plated through-hole formed in sensing element body 300) to front surface 302. Alternatively, inner conductor 306 may be coupled to center via 404, and center via 404 may be coupled to first conductor 402. Outer conductor 308 is coupled to a ground pad 406 that may include one or more traces or conductors that are formed integrally with, and/or coupled to, sensing element body rear surface 304. In the example embodiment, ground pad 406 is manufactured from copper and/or from any other conductive material that enables ground pad 406 to function as described herein. Ground pad 406 may be any size or geometry that enables sensor assembly 110 to function as described herein.

An outer via 408 is coupled to a second conductor 410 that is coupled to sensing element 500. Second conductor 410 may include a pin (not shown) that is inserted into outer via 408. In the example embodiment, outer via 408 is a blind via (i.e., a via that does not pass completely through sensing element body 300) that extends from an opening (not shown) on front surface 302 toward rear surface 304. A connecting portion or gap 412 between outer via 408 and ground pad 406 facilitates a capacitive coupling of second conductor 410 and outer via 408 to ground pad 406. Gap 412 may include the substrate material of sensing element body 300. Alternatively, gap 412 may include air or any dielectric material that enables sensor assembly 110 to function as described herein. Gap 412 may be any size or geometry that enables sensor assembly 110 to function as described herein.

During operation, at least one microwave signal is transmitted to sensing element 500 through data conduit 204. More specifically, the microwave signal is propagated to sensing element 500 via inner conductor 306 and first conductor 402. As the microwave signal is transmitted through sensing element 500 and second conductor 410, a capacitive coupling occurs between second conductor 410 and ground pad 406. The capacitive coupling across gap 412 induces a current through second conductor 410 and ground pad 406. The current in ground pad 406 is returned to signal processing device 200 through outer conductor 308. A proximity measurement is determined based on a loading induced to sensing element 500, as described more fully above. The capacitance of sensing element 500 facilitates providing frequency stability such that sensing element 500 may be controllably and/or predictably detuned by the presence and/or relative movement of an object with respect to sensing element 500. The capacitance facilitated by gap 412 may be adjusted by changing the size of gap 412 (i.e., the distance between outer via 408 and rear surface 304) or changing the diameter of outer via 408. Alternatively, capacitance may be increased by adding more than one outer via 408 to sensing element body 300. Moreover, capacitance may be adjusted by changing the distance between center via 404 and outer via 408.

FIG. 5 is an enlarged perspective view of a portion of sensing element body 300 taken along area 312 (shown in FIG. 3) that illustrates another example embodiment. Sensing element 500 is coupled to front surface 302 of sensing element body 300. Although FIG. 5 illustrates sensing element 500 having a generally spiral geometry, it should be recognized that sensing element 500 may be any size, shape, or configuration that enables sensor assembly 110 to function as described herein. In the example embodiment, sensing element 500 includes a plurality of conductors, or traces, that are formed integrally with, and/or coupled to, sensing element body front surface 302. The traces of sensing element 500 may have any width and/or spacing that enables sensor assembly 110 to function as described herein.

In the example embodiment, sensing element 500 is coupled to first conductor 402 and second conductor 410. Inner conductor 306 is coupled to first conductor 402. In the example embodiment, inner conductor 306 extends from rear surface 404 through center via 404 to front surface 302. Alternatively, inner conductor 306 may be coupled to center via 404, and center via 404 may be coupled to first conductor 402. In the example embodiment, second conductor 410 includes a pin (not shown) that is inserted into an outer via 502. Outer via 502 may be a plated through-hole that extends from front surface 302 to rear surface 304.

A connecting portion or keepout 504 substantially surrounds or circumscribes the opening to outer via 502 on rear surface 304 and facilitates a capacitive coupling between a ground pad 506 and both outer via 502 and second conductor 410. Keepout 504 may include the substrate material of sensing element body 300 and/or any dielectric that enables sensor assembly 110 to function as described herein. In the example embodiment, a portion of ground pad 506 substantially surrounds or circumscribes keepout 504. The capacitance facilitated by keepout 504 may be adjusted by changing the size or geometry of keepout 504. For example, keepout 504 may be circular with a diameter between 1 and 6 millimeters, elliptical, rectangular, polygonal, and/or any size or geometry that would enable sensing element 500 to function as described herein. Alternatively, capacitance facilitated by keepout 504 may be adjusted by adjusting the size, geometry and/or position of ground pad 506 relative to outer via 502, thereby adjusting the distance and/or relationship between ground pad 506 and outer via 502. For example, ground pad 506 may be adjacent to keepout 504 and may not circumscribe keepout 504.

During operation, at least one microwave signal is transmitted to sensing element 500 through data conduit 204. The microwave signal is transmitted to sensing element 500 by inner conductor 306 and first conductor 402. As the microwave signal is transmitted through sensing element 500 and second conductor 410, a capacitive coupling occurs between second conductor 410 and ground pad 506. The capacitive coupling across keepout 504 induces a current through second conductor 410 and ground pad 506. The current in ground pad 506 is returned to signal processing device 200 through outer conductor 308. A proximity measurement is determined based on a loading induced to sensing element 500, as described more fully above. The capacitance of sensing element 500 facilitates providing frequency stability such that sensing element 500 may be controllably and/or predictably detuned by the presence and/or relative movement of an object with respect to sensing element 500.

The above-described embodiments provide an efficient and cost-effective sensor assembly for use in measuring the proximity of a machine component to a sensor. The sensor assembly energizes a sensing element with a microwave signal. The sensing element is at least partially capacitively coupled to a signal processing device. When an object, such as a machine component, is positioned within the field, a loading is induced to the sensing element due to a disruption of the field. The sensor assembly calculates a proximity of the object to the sensing element based on the loading induced to the sensing element. The capacitive coupling of the sensing elements described herein facilitate providing a frequency stable electromagnetic field for use in measuring the proximity between the object and the sensing element. It should be appreciated that the capacitive coupling of the sensing elements described herein may be adjusted by adjusting the width or spacing of traces of the sensing element, the depth of the blind via, the keepout spacing, the number of vias, the spacing of vias and/or the shape, size, geometry, position, and/or orientation of any of the sensor assembly components as guided by the principles set forth herein.

Example embodiments of a sensor assembly and a sensing element are described above in detail. The sensor assembly and sensing element are not limited to the specific embodiments described herein, but rather, components of the sensor assembly and/or the sensing element may be utilized independently and separately from other components and/or steps described herein. For example, the sensing element may also be used in combination with other measuring systems and methods, and is not limited to practice with only the sensor assembly or the power generation system as described herein. Rather, the example embodiment can be implemented and utilized in connection with many other measurement and/or monitoring applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A probe (202) for use in a sensor assembly (110), said probe comprising:
a sensing element body (300); and
a sensing element (206) coupled to said sensing element body, said sensing element comprising:
a first conductor (402);
a second conductor (410); and
a connecting portion that enables said second conductor to be capacitively coupled to a ground pad (406), wherein said sensing element generates an electromagnetic field (224) when at least one signal is received, and wherein a loading is induced to said sensing element when an object is positioned within the electromagnetic field.

2. A probe (202) in accordance with Claim 1, further comprising a first data conduit (204) conductor that is coupled to said first conductor (402) and a second data conduit conductor that is coupled to said ground pad (406).

3. A probe (202) in accordance with Claim 1 or Claim 2, wherein said sensing element (206) is substantially spiral shaped.

4. A probe (202) in accordance with Claim 1, 2 or 3, wherein said sensing element body (300) is substantially planar.

5. A probe (202) in accordance with any preceding Claim, wherein said ground pad (406) is substantially elliptical.

6. A probe (202) in accordance with any preceding Claim, wherein said connecting portion comprises a substrate portion extending between a blind via and said ground pad (406).

7. A probe (202) in accordance with any preceding Claim, wherein said connecting portion comprises a keepout (504) that substantially circumscribes a via that extends through said sensing element body (300).

8. A probe (202) in accordance with Claim 7, wherein said ground pad (406) substantially circumscribes said keepout (504).

9. A probe (202) in accordance with Claim 7 or Claim 8, wherein said keepout (504) extends radially from said via.

10. A sensor assembly (110) comprising:
a probe (202) in accordance with any preceding Claim, and
a signal processing device (200) coupled to said sensing element for transmitting at least one signal to said sensing element and for calculating a proximity measurement based on a signal received from said sensing element.

11. A method for measuring a proximity of a machine component relative to a sensing element, said method comprising:
transmitting at least one signal to the sensing element (206), wherein the sensing element includes:
a first conductor (402);
a second conductor (410); and
a connecting portion that enables the second conductor to be capacitively coupled to a ground pad (406), wherein the sensing element generates an electromagnetic field (224) when at least one signal is received;
generating an electromagnetic field from the at least one signal;
generating a loading signal representative of a disruption of the electromagnetic field; and
calculating the proximity of the machine component to the sensing element based on the loading signal.

12. A method in accordance with Claim 11, wherein the sensing element (206) includes a first data conduit (204) conductor and a second data conduit conductor, wherein said method further comprises coupling the first data conduit (204) conductor to the first conductor and coupling the second data conduit conductor to the ground pad (406).

13. A method in accordance with Claim 11 or Claim 12, wherein said transmitting at least one signal to the sensing element comprises transmitting a signal between about 300 megahertz and about 300 gigahertz.
